# EUROPÄISCHE PATENTSCHRIFT

(11) **EP 3 605 404 B1**
(45) Veröffentlichungstag und Bekanntmachung des Hinweises auf die Patenterteilung: **04.10.2023**
(21) Anmeldenummer: 18187335.7
(22) Anmeldetag: 03.08.2018
(51) Int. Cl.: G06N 3/09, G06N 20/20, G06N 3/047, G06N 5/01, G06N 3/0464, G06N 3/0455, G06N 3/044

(54) **VERFAHREN UND VORRICHTUNG ZUM TRAINIEREN EINER MASCHINELLEN LERNROUTINE ZUM STEUERN EINES TECHNISCHEN SYSTEMS**
METHOD AND DEVICE FOR THE TRAINING OF A MACHINING LEARNING ROUTINE FOR CONTROLLING A TECHNICAL SYSTEM
PROCÉDÉ ET DISPOSITIF D'ENTRAÎNEMENT D'UNE ROUTINE D'APPRENTISSAGE MÉCANIQUE PERMETTANT DE COMMANDER UN SYSTÈME TECHNIQUE

(43) Veröffentlichungstag der Anmeldung: 05.02.2020
(73) Patentinhaber: Siemens Healthcare Diagnostics, Inc., Tarrytown, NY 10591 (US)
(72) Erfinder: Depeweg, Stefan, 81373 München (DE); Geipel, Markus Michael, 80799 München (DE); Marquardt, Gaby, 91353 Hausen (DE); Seidel, Daniela, 91083 Baiersdorf (DE); Tietz, Christoph, 85521 Ottobrunn (DE)

(56) Entgegenhaltungen:
- US-A1- 2015 052 093
- US-A1- 2015 324 688
- US-A1- 2018 181 865

## Beschreibung

Bei der Steuerung komplexer technischer Systeme, wie zum Beispiel medizinischen Diagnoseeinrichtungen, Bildanalyseeinrichtungen, Robotern, autonomen Systemen, Windturbinen, Gasturbinen oder Fertigungsanlagen werden zunehmend Verfahren des maschinellen Lernens eingesetzt, um Fähigkeiten des technischen Systems hinsichtlich vorgegebener Kriterien zu optimieren. Insbesondere kann hierbei eine Auswertung von Sensordaten des technischen Systems durch eine trainierte maschinelle Lernroutine gesteuert werden.

Zum Training von maschinellen Lernroutinen steht eine Vielzahl bekannter Lernverfahren, wie z.B. Verfahren des überwachten Lernens zur Verfügung. Als Trainingsdaten können dabei insbesondere historische oder aktuelle Betriebsdaten oder Sensordaten des zu steuernden technischen Systems oder ähnlicher technischer Systeme verwendet werden.

US 2015/052093 A1 offenbart ein Verfahren zum Trainieren eines neuronalen Netzes durch Modulation eines Trainingsparameters während des Trainings.

So kann beispielsweise bei einem medizinischen Diagnosegerät eine maschinelle Lernroutine darauf trainiert werden, auf mikroskopischen Bildern Zell- oder Gewebetypen oder auf tomographischen Aufnahmen Tumore spezifisch zu erkennen und zu klassifizieren. Für ein solches Training wird häufig eine große Vielzahl von vorab klassifizierten medizinischen Bildern verwendet, die der maschinellen Lernroutine als Trainingsdaten zugeführt werden. Die maschinelle Lernroutine kann damit darauf trainiert werden, die vorgegebene Klassifikation möglichst gut zu reproduzieren bzw. die Zelltypen, Gewebetypen oder Tumore mit möglichst geringer Abweichung zur vorgegebenen Klassifikation zu erkennen. Analog dazu kann eine maschinelle Lernroutine für eine Gasturbine, eine Fertigungsanlage oder ein anderes technisches System darauf trainiert werden, anhand von Sensordaten oder anderen Betriebsdaten spezifische Betriebszustände zu erkennen bzw. zu klassifizieren und/oder das technische System optimiert zu steuern.

In der Praxis kommt es indessen häufig vor, dass manche der zu erkennenden Klassen erheblich seltener auftreten als andere Erkennungsklassen. Dementsprechend sind für sehr seltene Erkennungsklassen in der Regel erheblich weniger Trainingsdaten vorhanden als für andere Erkennungsklassen.

Gerade im medizinischen Bereich ist es jedoch oft wichtig, seltene pathologische Muster oder Veränderungen korrekt zu erkennen. In solchen Fällen kann es sehr lange dauern, bis ausreichend viele Trainingsdaten von seltenen Klassen ausgewertet sind, um auch diese Klassen hinreichend zuverlässig zu erkennen.

Unabhängig davon können manche Erkennungsklassen anhand der vorgegebenen Trainingsdaten schwieriger voneinander zu unterscheiden sein als andere Erkennungsklassen. In solchen Fällen kommt es oft vor, dass eine Erkennungssicherheit auch bei fortgesetztem Training nicht mehr wesentlich verbessert werden kann.

Gemäß dem bisherigen Stand der Technik wird den vorstehenden Umständen häufig dadurch Rechnung getragen, dass die Menge an Trainingsdaten sukzessive vergrößert wird und dabei eine Erfolgsquote der maschinellen Lernroutine beobachtet wird. Sobald sich die Erfolgsquote, insbesondere auch bei seltenen Erkennungsklassen nicht mehr signifikant verbessert, kann das Training beendet werden. Wenn eine Erfolgsquote dauerhaft niedrig bleibt, kann dies weiterhin als Indiz dafür gewertet werden, dass sich die zum Training genutzten Sensordaten nicht gut für eine sichere Erkennung eignen. In einem solchen Fall wird das Training oft mit anderen Sensordaten fortgesetzt oder wiederholt.

Durch die vorstehende Verfahrensweise kann ein erforderlicher Trainingsaufwand, insbesondere bei Vorliegen von seltenen Erkennungsklassen erheblich steigen.

Es ist Aufgabe der vorliegenden Erfindung, ein Verfahren und eine Vorrichtung zum Trainieren einer maschinellen Lernroutine zum Steuern eines technischen Systems anzugeben, die ein effizienteres Training erlauben.

Gelöst wird diese Aufgabe durch ein Verfahren mit den Merkmalen des Patentanspruchs 1, durch eine Vorrichtung mit den Merkmalen des Patentanspruchs 13, durch ein Computerprogrammprodukt mit den Merkmalen des Patentanspruchs 14 sowie durch ein computerlesbares Speichermedium mit den Merkmalen des Patentanspruchs 15.

Es erweist sich, dass eine im Training auftretende Werteverteilung von Lernparametern, und insbesondere deren Verteilungsbreite oft ein früher Indikator dafür ist, ob ein Trainingserfolg durch Zuführung weiterer erster Trainingsdaten verbessert werden kann oder eher nicht. Im letzten Fall können bereits frühzeitig qualitativ andere Trainingsdaten angefordert und zum weiteren Training benutzt werden. Auf diese Weise kann häufig vermieden werden, dass weiter erste Trainingsdaten zugeführt werden, die den Trainingserfolg nicht mehr wesentlich verbessern.

Durch die Erfindung kann das Training und insbesondre die Zuführung geeigneter Trainingsdaten in vorteilhafter Weise gesteuert werden und so das Training häufig erheblich verbessert oder verkürzt werden.

Abhängig davon kann das technische System in optimierter Weise gesteuert werden.

Das erfindungsgemäße Verfahren, die erfindungsgemäße Vorrichtung sowie das erfindungsgemäße Computerprogrammprodukt können beispielsweise mittels eines oder mehrerer Prozessoren, anwendungsspezifischen integrierten Schaltungen (ASIC), digitalen Signalprozessoren (DSP) und/oder sogenannten "Field Programmable Gate Arrays" (FPGA) ausgeführt bzw. implementiert werden.

Vorteilhafte Ausführungsformen und Weiterbildungen der Erfindung sind in den abhängigen Ansprüchen angegeben.

Gemäß vorteilhafter Ausführungsformen der Erfindung können die anderen Trainingsdaten zusätzlich einen anderen Typ als die ersten Trainingsdaten aufweisen, auf eine andere Weise als die ersten Trainingsdaten erfasst werden, andere Sensordaten als die ersten Sensordaten umfassen und/oder von einer anderen Quelle als die ersten Trainingsdaten stammen.

Weiterhin kann abhängig von der Fortsetzungsmeldung ein Sensor oder ein Sensorsystem zusätzlich derart angesteuert werden, dass ein Sensorparameter eines Sensors zur Erfassung von Trainingsdaten modifiziert wird, dass ein Sensor des Sensorsystems dazu veranlasst wird, Trainingsdaten zu erfassen und/oder dass spezifische Sensordaten des Sensorsystems als Trainingsdaten selektiert werden.

Gemäß einer vorteilhaften Ausführungsform der Erfindung kann eine Verteilungsbreite und/oder ein Entropiewert der Werteverteilung der Lernparameter ermittelt werden. Mit steigender Verteilungsbreite und/oder steigendem Entropiewert kann dann bevorzugt das Training mit der weiteren Abfolge der ersten Trainingsdaten fortgesetzt werden. Dies ist insofern vorteilhaft, als eine größere Verteilungsbreite oder ein größerer Entropiewert der Werteverteilung der Lernparameter in vielen Fällen als Indiz dafür gewertet werden kann, dass eine optimale Einstellung der Lernparameter noch nicht gefunden ist. In solchen Fällen kann häufig erwartet werden, dass ein Trainingserfolg durch weiteres Training mit den ersten Trainingsdaten noch verbessert werden kann. Eine jeweilige Verteilungsbreite kann insbesondere aus Werteverteilungen einzelner Lernparameter, aus Werteverteilungen von Gruppen von Lernparametern oder aus einer Werteverteilung aller Lernparameter ermittelt werden.

Nach einer weiteren vorteilhaften Ausführungsform der Erfindung kann eine Werteverteilung von Ausgabedaten der Lernroutine ermittelt und die Fortsetzungsmeldung abhängig von der Werteverteilung der Ausgabedaten gebildet werden.

Insbesondere kann eine Verteilungsbreite und/oder ein Entropiewert der Werteverteilung der Ausgabedaten ermittelt werden. Mit steigender Verteilungsbreite und/oder steigendem Entropiewert können dann bevorzugt die anderen Trainingsdaten angefordert werden. Dies ist insofern vorteilhaft, als eine größere Verteilungsbreite oder ein größerer Entropiewert der Werteverteilung der Ausgabedaten in vielen Fällen als Indiz dafür gewertet werden kann, dass die trainierte Lernroutine nur unsichere Ergebnisse liefern kann. In solchen Fällen kann ein Trainingserfolg häufig durch Wechsel auf qualitativ andere Trainingsdaten verbessert werden.

Als jeweilige Verteilungsbreite kann insbesondere eine Streuung, Varianz oder Standardabweichung der Werteverteilung der Lernparameter oder der Werteverteilung der Ausgabedaten ermittelt werden.

Vorteilhafterweise kann eine jeweilige Werteverteilung durch eine Verteilungsbreite und/oder einen Mittelwert, vorzugsweise einer statistischen Gaußverteilung oder einer kategorischen Verteilung über Erkennungsklassen repräsentiert, dargestellt oder modelliert werden. Auf diese Weise können die Werteverteilungen platzsparend gespeichert sowie effizient verarbeitet werden.

Nach einer vorteilhaften Weiterbildung der Erfindung können die Trainingsdatensätze der ersten Trainingsdaten jeweils einer spezifischen Erkennungsklasse zugeordnet sein. Vorzugsweise kann die Zuordnung zu einer Erkennungsklasse durch eine im jeweiligen Trainingsdatensatz gespeicherte Klassenangabe realisiert sein. Eine solche Klassenangabe kann beispielsweise ein mikroskopisches Bild einer biologischen Zelle einem bestimmten Zelltyp als Erkennungsklasse zuordnen. Für eine jeweilige Erkennungsklasse können anhand der dieser Erkennungsklasse zugeordneten ersten Trainingsdatensätze eine klassenspezifische Werteverteilung von Lernparametern ermittelt werden, abhängig von der klassenspezifischen Werteverteilung der Lernparameter eine klassenspezifische Fortsetzungsmeldung erzeugt werden, und abhängig von der klassenspezifischen Fortsetzungsmeldung das Training mit dieser Erkennungsklasse zugeordneten ersten Trainingsdaten fortgesetzt werden oder andere dieser Erkennungsklasse zugeordnete Trainingsdaten angefordert werden. Auf diese Weise kann die Zuführung von trainingsfördernden Trainingsdaten klassenspezifisch gesteuert werden. Insbesondere kann individuell für eine jeweilige Erkennungsklasse ermittelt werden, ob ein Training mit weiteren ersten Trainingsdaten oder ein Wechsel zu anderen Trainingsdaten voraussichtlich vorteilhafter ist. Entsprechend können die für eine jeweilige Erkennungsklasse weiter zu verwendenden Trainingsdaten klassenspezifisch selektiert werden.

Nach einer besonders vorteilhaften Ausführungsform der Erfindung kann die Werteverteilung der Lernparameter durch die maschinelle Lernroutine mittels eines bayessches neuronalen Netzes ermittelt werden, wobei die Lernparameter durch neuronale Gewichte des bayesschen neuronalen Netzes realisiert sind. Die Werteverteilung kann beispielsweise mittels Markow-Ketten-Monte-Carlo-Verfahren, Laplace-Approximationen und/oder Schlussfolgerungs-Verfahren insbesondere durch Parameter-Fitting ermittelt werden. Derartige bayessche neuronale Netze sind besonderes dazu geeignet, statistische Verteilungen, insbesondere von Lernparametern zu modellieren.

Gemäß einer weiteren Ausführungsform der Erfindung kann durch die maschinelle Lernroutine ein Ensemble von maschinellen Sub-Lernroutinen ausgeführt werden, durch die jeweils ein Satz von Lernparametern eingestellt wird. Die Werteverteilung der Lernparameter kann dann aus einer Verteilung der Lernparameter über die Lernparametersätze abgeleitet werden.

Nach einer weiteren Ausführungsform der Erfindung kann die maschinelle Lernroutine ein neuronales Netz implementieren, wobei die Lernparameter neuronale Gewichte des neuronalen Netzes sind. Hierbei kann eine neuronale Struktur des neuronalen Netzes mehrfach variiert werden, wobei für eine jeweilige Variation ein Satz von Ausgabedaten des neuronalen Netzes ermittelt wird. Die Werteverteilung der Lernparameter kann dann aus einer Verteilung der Ausgabedaten über die Ausgabendatensätze abgeleitet werden. Zur Variation der neuronalen Struktur können Neuronen des neuronalen Netzes auf unterschiedliche Weise, vorzugsweise zufallsbedingt abgeschaltet werden. Derartige Abschaltungen werden häufig auch als Dropout bezeichnet. Die unterschiedlichen Abschaltungen bedingen jeweils eine Variation der Ausgabedaten. Aus der Verteilung der variierten Ausgabedaten sowie aus dem Muster der Abschaltungen kann auf eine Werteverteilung der Lernparameter rückgeschlossen werden.

Ein Ausführungsbeispiel der Erfindung wird nachfolgend anhand der Zeichnung näher erläutert. Dabei zeigen jeweils in schematischer Darstellung:
- Figur 1: ein medizinisches Diagnosegerät mit einer trainierten Auswerteeinrichtung und
- Figur 2: eine erfindungsgemäße Vorrichtung zum Trainieren einer Auswerteeinrichtung.

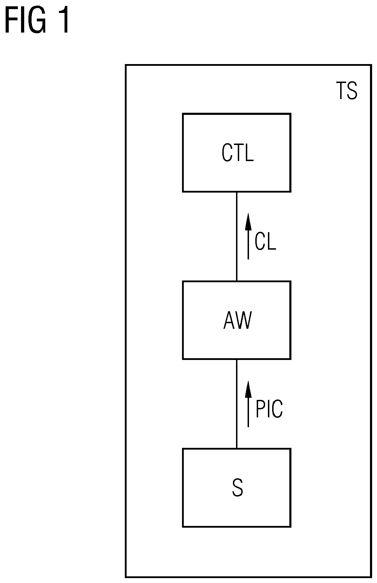

Figur 1 zeigt in schematischer Darstellung beispielhaft ein medizinisches Diagnosegerät als technisches System TS mit mindestens einem Sensor S und einer mittels eines maschinellen Lernverfahrens trainierten Auswerteeinrichtung AW. Letztere dient zur Auswertung von Sensordaten des Sensors S. Die Auswerteeinrichtung AW kann als Teil des Diagnosegerätes TS oder ganz oder teilweise extern zum Diagnosegerät TS implementiert sein. Die Auswerteeinrichtung AW ist an den Sensor S sowie an eine Steuereinrichtung CTL des Diagnosegerätes TS gekoppelt. Die prozessor- oder computergesteuerte Steuereinrichtung CTL dient zum Steuern des Diagnosegerätes TS.

Im vorliegenden Ausführungsbeispiel wird beispielhaft ein Diagnosegerät TS betrachtet, das anhand von mikroskopischen Bildaufnahmen PIC von biologischem Gewebe oder von biologischen Zellen automatisch einen Typ oder einen Zustand des Gewebes bzw. der Zellen und/oder eine jeweilige pathologische Klasse erkennen soll. Abhängig von der Erkennung können dann durch das Diagnosegerät TS oder dessen Steuereinrichtung CTL weitere Maßnahmen eingeleitet werden, z.B. eine spezifische Behandlung oder Untersuchung des aufgenommenen biologischen Gewebes oder der biologischen Zellen, eine Ausgabe von Diagnose- oder Therapiehinweisen oder automatische Behandlungsmaßnahmen, wie z.B. eine Verabreichung und/oder Dosierung eines Medikaments.

Dementsprechend ist der Sensor S als Mikroskop ausgestaltet, das mikroskopische Bilder PIC vom biologischen Gewebe oder von den biologischen Zellen aufnimmt und zur Auswerteeinrichtung AW übermittelt. Zusätzlich kann auch ein anderer bildgebender Sensor, z.B. eine Kamera oder ein bildgebendes Verfahren, z.B. ein tomografisches oder sonografisches Verfahren vorgesehen sein, um zwei- und/oder dreidimensionale Bildaufnahmen zu erstellen.

Die trainierte Auswerteeinrichtung AW klassifiziert die auf den Bildern PIC dargestellten Gewebe oder Zellen nach vorgegebenen Erkennungsklassen CL, d.h. beispielsweise nach ihrem Typ, Zustand oder nach ihrer pathologischen Klasse. Eine jeweils auf einem Bild PIC erkannte Klasse CL eines Gewebes oder einer Zelle wird durch die Auswerteeinrichtung AW jeweils in Form einer Klassenkennung zur Steuereinrichtung CTL übermittelt. Anhand der übermittelten Erkennungsklassen CL wird durch die Steuereinrichtung CTL ein weiteres Verhalten des Diagnosegerätes TS - wie oben bereits erwähnt - gesteuert.

Gemäß nicht beanspruchte Ausführungsformen kann als technisches System TS beispielsweise auch ein Roboter, ein autonomes System, eine Windturbine, eine Gasturbine oder eine Fertigungsanlage anhand einer spezifisch trainierten Auswerteeinrichtung AW gesteuert werden. Die Auswerteeinrichtung AW kann hierbei darauf trainiert sein, anhand von Sensordaten oder anderen Betriebsdaten des technischen Systems TS spezifische Betriebszustände des technischen Systems TS zu erkennen bzw. zu klassifizieren und/oder das technische System TS mittels der Steuereinrichtung CTL optimiert zu steuern.

Unter einem Steuern eines technischen Systems sei hierbei auch eine Ausgabe und Verwendung von steuerungsrelevanten, d.h. zum Steuern des technischen Systems beitragenden Daten und Steuersignalen verstanden. Derartige steuerungsrelevante Daten können insbesondere Klassifikationsdaten, Analysedaten, Prognosedaten und/oder Überwachungsdaten umfassen, die insbesondere zur Überwachung des technischen Systems und/oder zur Verschleiß- und/oder Beschädigungserkennung verwendet werden können.

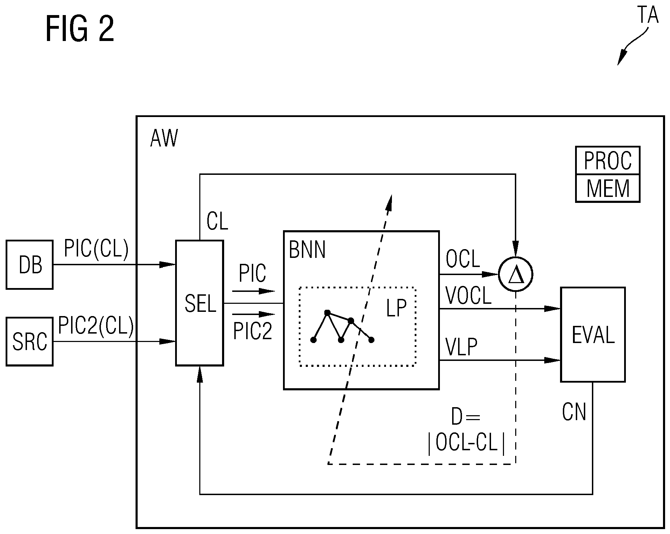

Figur 2 zeigt in schematischer Darstellung eine erfindungsgemäße Vorrichtung TA zum Trainieren der Auswerteeinrichtung AW. Die Auswerteeinrichtung AW verfügt über einen oder mehrere Computer oder Prozessoren PROC zum Ausführen aller Verfahrensschritte der Auswerteeinrichtung AW sowie über eine oder mehrere mit dem Prozessor PROC gekoppelte Speicher MEM zum Speichern der von der Auswerteeinrichtung AW zu verarbeitenden Daten.

Die Auswerteeinrichtung AW wird anhand einer Vielzahl von klassifizierten Trainingsdatensätzen trainiert, die im vorliegenden Ausführungsbeispiel unter anderem aus einer an die Auswerteeinrichtung AW gekoppelten Datenbank DB eingelesen werden.

Aus der Datenbank DB werden mikroskopische Bildaufnahmen PIC, denen jeweils eine Erkennungsklasse CL zugeordnet ist, als klassifizierte erste Trainingsdaten PIC(CL) eingelesen. Eine jeweilige Erkennungsklasse CL gibt hierbei z.B. einen Typ, einen Zustand und/oder eine pathologische Klasse von auf der jeweiligen Bildaufnahme PIC dargestellten Zellen oder Geweben an. Die Zuordnung einer jeweiligen Erkennungsklasse CL kann vorab, z.B. durch Experten erfolgen. Eine jeweilige Erkennungsklasse CL ist vorzugsweise in Form einer die betreffende Erkennungsklasse CL identifizierenden Klassenkennung neben den Bilddaten PIC in der betreffenden klassifizierten Bildaufnahme PIC(CL) gespeichert. Die Bildaufnahmen PIC können beispielsweise als erste Sensordaten von einem Mikroskop als bildgebendem Sensor stammen.

Darüber hinaus ist die Auswerteeinrichtung AW noch an eine andere Quelle SRC von klassifizierten Trainingsdaten PIC2(CL) koppelbar. Die dort verfügbaren Trainingsdaten PIC2(CL) enthalten andere Sensordaten PIC2 als die ersten Trainingsdaten PIC(CL). In den anderen klassifizierten Trainingsdaten PIC2(CL) sind die anderen Sensordaten ebenfalls jeweils einer Erkennungsklasse CL zugeordnet.

Die anderen Sensordaten PIC2 können sich von den ersten Sensordaten PIC insbesondere hinsichtlich ihres Typs, ihrer Qualität, ihrer Erfassungsweise und/oder hinsichtlich des erfassenden Sensors und/oder dessen Sensoreinstellungen unterscheiden. Erfindungsgemäß enthalten die anderen Sensordaten PIC2 medizinische Bildaufnahmen , die mit höherer Bildauflösung, anderer Vergrößerung und/oder in einem anderen Spektralbereich aufgenommen wurden, wobei die anderen Trainingsdaten von dem Mikroskop, mit einem anderen Mikroskop und/oder einer anderen Kamera aufgenommen wurden. Darüber hinaus können zusätzlich die anderen Sensordaten PIC2 auch andere physikalische oder chemische Größen umfassen und quantifizieren. Im Allgemeinen sollten die anderen Sensordaten PIC2 vorzugsweise andere Erkennungsmerkmale oder andere Erkennungsaspekte der Erkennungsklassen CL betreffen oder beinhalten als die ersten Sensordaten PIC.

Die anderen Trainingsdaten PIC2(CL) können durch die Auswerteeinrichtung AW aus der Trainingsdatenquelle SRC insbesondere erkennungsklassenspezifisch angefordert werden. Die Trainingsdatenquelle SRC kann eine weitere Datenbank, weitere Sensoren und/oder ein Sensornetzwerk umfassen.

Zum Training der Auswerteeinrichtung AW werden zunächst die klassifizierten Bildaufnahmen PIC(CL) als Abfolge von ersten Trainingsdaten durch ein Selektionsmodul SEL der Auswerteeinrichtung AW eingelesen. Das Selektionsmodul SEL übermittelt die Bildaufnahmen PIC zu einer datengetriebenen maschinellen Lernroutine der Auswerteeinrichtung AW.

Die maschinelle Lernroutine ist im vorliegenden Ausführungsbeispiel durch ein mit dem Selektionsmodul SEL gekoppeltes bayessches neuronales Netz BNN implementiert. Das bayessche neuronale Netz BNN ist als faltendes neuronales Netz ausgestaltet. Ein solches faltendes neuronales Netz lässt sich bekanntermaßen vorteilhaft zur Bildverarbeitung und Bildmustererkennung verwenden. Das neuronale Netz BNN bzw. die hierdurch implementierte maschinelle Lernroutine ist datengetrieben trainierbar und weist eine Trainingsstruktur auf, die sich während eines Trainings ausbildet. Das neuronale Netz BNN bzw. seine Trainingsstruktur wird durch Lernparameter LP parametrisiert, die durch das Training eingestellt werden.

Unter einem Training sei dabei allgemein eine Optimierung einer Abbildung von Eingabeparametern eines parametrisierten Systemmodells, z.B. eines neuronalen Netzes, auf einen oder mehrere Ausgabeparameter, hier die zu erkennenden Klassen CL, verstanden. Diese Abbildung wird nach vorgegebenen, gelernten und/oder zu lernenden Kriterien während einer Trainingsphase optimiert. Als Kriterien können insbesondere bei Klassifikationsmodellen ein Klassifikationsfehler, ein Analysefehler und/oder ein Prädiktionsfehler herangezogen werden. Darüber hinaus können weitere, eine Steuerung des technischen Systems TS betreffende Kriterien vorgesehen sein. Eine Trainingsstruktur kann z.B. eine Vernetzungsstruktur von Neuronen eines neuronalen Netzes und/oder Gewichte von Verbindungen zwischen den Neuronen umfassen, die durch das Training so ausgebildet werden, dass die vorgegebenen Kriterien möglichst gut erfüllt werden.

Die Lernparameter LP sind die durch das Training zu optimierenden Modellparameter des Systemmodells, das der maschinellen Lernroutine zugrunde liegt. Im vorliegenden Ausführungsbeispiel sind die Lernparameter LP durch die Gewichte der neuronalen Verbindungen des neuronalen Netzes BNN realisiert.

Durch das Training wird angestrebt, dass das neuronale Netz BNN die zugeführten Bildaufnahmen PIC möglichst häufig mit der korrekten Erkennungsklasse CL klassifiziert. Zu diesem Zweck werden die Lernparameter LP durch das Training so eingestellt, dass eine vom neuronalen Netz BNN für eine zugeführte Bildaufnahmen PIC ausgegebene Erkennungsklasse OCL die vorgegebene Erkennungsklasse CL dieser Bildaufnahme PIC möglichst gut reproduziert. Dies kann beispielsweise dadurch erreicht werden, dass die von einer Ausgabeschicht des neuronalen Netzes BNN als Ausgabedaten ausgegebenen Erkennungsklassen OCL mit den vorgegebenen Erkennungsklassen CL verglichen werden, die von der Selektionseinrichtung SEL bereitgestellt werden. Im Rahmen dieses Vergleichs wird ein Abstand D zwischen den Ausgabedaten OCL und den dazu korrespondierenden, vorgegebenen Erkennungsklassen CL gebildet. Der Abstand D repräsentiert hierbei einen Klassifikationsfehler des neuronalen Netzes BNN. Der Abstand D wird, wie in Figur 2 durch einen strichlierten Pfeil angedeutet, zum neuronalen Netz BNN zurückgeführt. Anhand des zurückgeführten Abstands D wird das neuronale Netz BNN darauf trainiert, diesen Abstand D zu minimieren, d.h. die vorgegebenen Erkennungsklassen CL durch die ausgegebenen Erkennungsklassen OCL möglichst gut zu reproduzieren. Hierzu können die Lernparameter LP durch Standard-Optimierungsverfahren so lange variiert werden, bis der Abstand D minimiert ist. Zur Minimierung kann z.B. eine Gradientenabstiegsmethode verwendet werden.

Durch das neuronale Netz BNN wird weiterhin eine im Training auftretende Werteverteilung VLP der Lernparameter LP ermittelt. Bei der Ermittlung der Werteverteilung VLP wird vorteilhafterweise angenommen, dass sich die Lernparameter LP gemäß einer ggf. mehrdimensionalen statistischen Gaußverteilung verteilen und dass die Verteilungen einzelner Lernparameter voneinander unabhängig sind. Die Werteverteilung VLP wird dann durch eine Verteilungsbreite, hier eine Varianz oder Standardabweichung dieser Gaußverteilung repräsentiert. Derartige Werteverteilungen von netzinternen Lernparametern LP können durch ein bayessches neuronales Netz, hier BNN, mit Standardverfahren effizient modelliert und ermittelt werden. Alternativ oder zusätzlich zur Verteilungsbreite der Werteverteilung VLP kann ein Entropiewert der Werteverteilung VLP ermittelt werden.

Es erweist sich, dass eine kleinere Verteilungsbreite der Lernparameter LP als Indiz dafür gewertet werden kann, dass die Lernparameter LP schon verhältnismäßig genau eingestellt sind, d.h. das das neuronale Netz BNN anhand der ersten Trainingsdaten PIC(CL) schon weitgehend optimiert ist. In diesem Fall ist durch weiteres Training mit den ersten Trainingsdaten PIC(CL) nur eine geringe Verbesserung zu erwarten. Umgekehrt kann eine größere Verteilungsbreite der Lernparameter LP als Indiz dafür gewertet werden, dass ein Optimum noch nicht gefunden ist und eine Klassifikationsgenauigkeit durch weiteres Training mit Trainingsdaten desselben Typs, hier PIC(CL) verbessert werden kann.

Eine Klassifikationsunsicherheit, die durch weiteres Training mit mehr Trainingsdaten desselben Typs verringert werden kann, wird häufig auch als epistemische Unsicherheit bezeichnet.

Mittels des neuronalen Netzes BNN wird weiterhin eine Werteverteilung VOCL der Ausgabedaten OCL des neuronalen Netzes BNN ermittelt. Bei der Ermittlung der Werteverteilung VOCL wird vorteilhafterweise angenommen, dass sich die Ausgabedaten OCL gemäß einer ggf. mehrdimensionalen statistischen Gaußverteilung oder einer kategorischen Verteilung über die Erkennungsklassen verteilen und dass die Verteilungen einzelner Ausgabedaten voneinander unabhängig sind. Die Werteverteilung VOCL wird dann durch eine Verteilungsbreite, hier eine Varianz oder Standardabweichung der Gaußverteilung oder der kategorischen Verteilung repräsentiert. Alternativ oder zusätzlich zur Verteilungsbreite kann auch ein Entropiewert der Werteverteilung VOCL ermittelt werden.

Es erweist sich, dass eine größere Verteilungsbreite der Ausgabedaten OCL als Indiz dafür gewertet werden kann, dass das trainierte neuronale Netz BNN nur eine unsichere Klassifikation vornehmen kann. Wenn gleichzeitig die Werteverteilung VLP der Lernparameter LP verhältnismäßig klein ist, - was für ein weitgehend austrainiertes neuronales Netz BNN spricht - ist kaum zu erwarten, dass eine Klassifikationsqualität durch weiteres Training mit Trainingsdaten desselben Typs, hier PIC(CL) wesentlich verbessert wird. In solchen Fällen kann die Klassifikationsqualität jedoch häufig erheblich verbessert werden, indem das Training mit anderen Trainingsdaten, hier PIC2(CL) fortgesetzt wird.

Eine derartige Klassifikationsunsicherheit, die sich durch Weitertrainieren mit Trainingsdaten desselben Typs nicht wesentlich verbessert, wird häufig auch als aleatorische Unsicherheit bezeichnet. Eine aleatorische Unsicherheit tritt beispielsweise bei einer versuchten Voraussage eines zufälligen Münzwurfs auf oder bei einer versuchten Klassifikation anhand nicht relevanter oder mit der Klassifikation nicht korrelierender Sensordaten. Eine solche Klassifikation kann nicht durch Vergrößerung der Menge (nicht relevanter) Trainingsdaten verbessert werden.

Die Werteverteilungen VLP sowie VOCL werden vom neuronalen Netz BNN zu einem Bewertungsmodul EVAL der Auswerteeinrichtung AW übermittelt. Das Bewertungsmodul EVAL ist an das neuronale Netz BNN gekoppelt und dient zum Bewerten eines Trainingsfortschritts. Das Bewertungsmodul EVAL quantifiziert anhand der Werteverteilung VOCL der Ausgabedaten OCL sowie der Werteverteilung VLP der Lernparameter LP eine aleatorische Unsicherheit sowie eine epistemische Unsicherheit. Abhängig davon bildet das Bewertungsmodul EVAL eine quantifizierte Verbesserungsangabe über eine zu erwartende Verbesserung der Klassifikation durch weiteres Training mit den vorliegenden, ersten Trainingsdaten, hier PIC(CL). Die Verbesserungsangabe kann z.B. anhand einer gewichteten Summe der Verteilungsbreiten VLP und VOCL gebildet werden. Wie oben bereits erwähnt, wird die Verbesserungsangabe vorzugsweise derart gebildet, dass sie mit fallender Verteilungsbreite VLP und steigender Verteilungsbreite VOCL fällt.

Abhängig von der Verbesserungsangabe wird weiterhin eine Fortsetzungsmeldung CN generiert und vom Bewertungsmodul EVAL zum Selektionsmodul SEL übermittelt. Die Fortsetzungsmeldung CN kann insbesondere die Werteverteilungen VLP und VOCL sowie die Verbesserungsangabe enthalten.

Abhängig von der empfangenen Fortsetzungsmeldung CN und der darin enthaltenen Verbesserungsangabe werden durch das Selektionsmodul SEL für das weitere Training entweder weitere erste Trainingsdaten PIC(CL) aus der Datenbank DB selektiert oder andere Trainingsdaten PIC2(CL) aus der Trainingsdatenquelle SRC angefordert. Dabei kann ein Schwellwert für die Verbesserungsangabe derart vorgegeben sein, dass oberhalb des Schwellwerts weiter mit ersten Trainingsdaten PIC(CL) trainiert wird und unterhalb des Schwellwerts die anderen Trainingsdaten PIC2(CL) angefordert und zum weiteren Training verwendet werden.

Alternativ oder zusätzlich kann die Fortsetzungsmeldung CN auch zur Trainingsdatenquelle SRC übermittelt werden, um dort beispielsweise einen Sensor eines Sensornetzwerks zur Erfassung von Trainingsdaten zu veranlassen, eine Einstellung eines Sensors zu modifizieren und/oder Sensordaten spezifisch zu selektieren.

Vorzugsweise wird die vorstehend beschriebene Selektion der für das weitere Training zu verwendenden Trainingsdaten erkennungsklassenspezifisch, d.h. individuell für eine jeweilige Erkennungsklasse CL der Trainingsdaten durchgeführt. Dabei werden für eine jeweilige Erkennungsklasse CL erkennungsklassenspezifische Werteverteilungen VLP und VOCL ermittelt, eine erkennungsklassenspezifische Fortsetzungsmeldung CN erzeugt und durch das Selektionsmodul SEL abhängig von der erkennungsklassenspezifischen Fortsetzungsmeldung CN für das weitere Training entweder weitere erste Trainingsdaten PIC(CL) der betreffenden Erkennungsklasse CL aus der Datenbank DB selektiert oder andere Trainingsdaten PIC2(CL) der betreffenden Erkennungsklasse CL aus der Trainingsdatenquelle SRC angefordert.

Durch das erfindungsgemäße Verfahren kann das Training des neuronalen Netzes BNN bzw. der Auswerteeinrichtung AW effizient gesteuert werden. Anstatt ggf. nach längerer Zeit zu erkennen, dass sich eine Klassifikationsqualität für eine spezifische Erkennungsklasse nicht signifikant verbessert, können bereits frühzeitig und klassenspezifisch qualitativ andere Trainingsdaten angefordert und zum weiteren Training benutzt werden. Damit kann in der Regel vermieden werden, dass weitere Trainingsdaten zugeführt werden, die den Klassifikationserfolg insbesondere für einzelne seltene Erkennungsklassen nicht wesentlich verbessern. In der Regel kann damit eine Trainingsdauer erheblich verkürzt und/oder ein Lernerfolg erheblich verbessert werden.

## Patentansprüche

1. Computerimplementiertes Verfahren zum Trainieren einer maschinellen Lernroutine (BNN) zum Steuern eines technischen Systems (TS), wobei das technische System (TS) ein medizinisches Diagnosegerät ist mit mindestens einem Sensor S und einer mittels eines maschinellen Lernverfahrens trainierten Auswerteeinrichtung AW zur Auswertung von Sensordaten des Sensors S, wobei der mindestens eine Sensor S als Mikroskop ausgestaltet ist, das mikroskopische Bilder PIC von biologischem Gewebe oder von biologischen Zellen aufnimmt und zur Auswerteeinrichtung (AW) übermittelt, wobei ein Typ oder ein Zustand des Gewebes bzw. der Zellen und/oder eine jeweilige pathologische Klasse bei der Auswertung erkannt wird, wobei
a) eine Abfolge von ersten Trainingsdaten (PIC) mit ersten Sensordaten des medizinischen Diagnosegeräts durch die maschinelle Lernroutine (BNN) der Auswerteeinrichtung eingelesen wird,
b) die maschinelle Lernroutine (BNN) anhand der ersten Trainingsdaten (PIC) trainiert wird, wobei durch das Training eine Vielzahl von Lernparametern (LP) der maschinellen Lernroutine (BNN) eingestellt wird,
c) eine im Training auftretende Werteverteilung (VLP) von Lernparametern (LP) ermittelt wird,
d) abhängig von der ermittelten Werteverteilung (VLP) der Lernparameter (LP) eine Fortsetzungsmeldung (CN) erzeugt wird, und
e) abhängig von der Fortsetzungsmeldung (CN) das Training mit einer weiteren Abfolge der ersten Trainingsdaten (PIC) fortgesetzt wird oder andere Trainingsdaten (PIC2) für das Training angefordert werden,
wobei abhängig von der Fortsetzungsmeldung (CN) der mindestens eine Sensor derart angesteuert wird, dass ein Sensorparameter des Sensors zur Erfassung von den anderen Trainingsdaten (PIC2) modifiziert wird, oder ein unterschiedlicher Sensor zur Erfassung von den anderen Trainingsdaten (PIC2) verwendet wird,
wobei die anderen Trainingsdaten (PIC2) von dem Mikroskop, mit einem anderen Mikroskop und/oder einer anderen Kamera aufgenommen werden, wobei die anderen Trainingsdaten (PIC2) mit höherer Bildauflösung, anderer Vergrößerung, und/oder in einem anderen Spektralbereich als die ersten Trainingsdaten (PIC) aufgenommen werden.

2. Verfahren nach Anspruch 1, **dadurch gekennzeichnet, dass** die anderen Trainingsdaten (PIC2) zusätzlich
- einen anderen Typ als die ersten Trainingsdaten (PIC) aufweisen,
- auf eine andere Weise als die ersten Trainingsdaten (PIC) erfasst werden,
- andere Sensordaten als die ersten Sensordaten umfassen und/oder
- von einer anderen Quelle als die ersten Trainingsdaten (PIC) stammen.

3. Verfahren nach einem der vorhergehenden Ansprüche, **dadurch gekennzeichnet,**
**dass** abhängig von der Fortsetzungsmeldung (CN) ein Sensorsystem zusätzlich derart angesteuert wird, dass
- ein Sensor des Sensorsystems dazu veranlasst wird, Trainingsdaten zu erfassen, und/oder
- Sensordaten des Sensorsystems als Trainingsdaten selektiert werden.

4. Verfahren nach einem der vorhergehenden Ansprüche, **dadurch gekennzeichnet,**
**dass** eine Verteilungsbreite und/oder ein Entropiewert der Werteverteilung (VLP) der Lernparameter (LP) ermittelt wird, und
**dass** mit steigender Verteilungsbreite und/oder steigendem Entropiewert bevorzugt das Training mit der weiteren Abfolge der ersten Trainingsdaten (PIC) fortgesetzt wird.

5. Verfahren nach einem der vorhergehenden Ansprüche, **dadurch gekennzeichnet,**
**dass** eine Werteverteilung (VOCL) von Ausgabedaten (OCL) der Lernroutine (BNN) ermittelt wird, und
**dass** die Fortsetzungsmeldung (CN) abhängig von der Werteverteilung (VOCL) der Ausgabedaten (OCL) gebildet wird.

6. Verfahren nach Anspruch 5, **dadurch gekennzeichnet,**
**dass** eine Verteilungsbreite und/oder ein Entropiewert der Werteverteilung (VOCL) der Ausgabedaten (OCL) ermittelt wird, und
**dass** mit steigender Verteilungsbreite und/oder steigendem Entropiewert bevorzugt die anderen Trainingsdaten (PIC2) angefordert werden.

7. Verfahren nach einem der vorhergehenden Ansprüche, **dadurch gekennzeichnet,**
**dass** eine jeweilige Werteverteilung (VLP, VOCL) durch eine Verteilungsbreite repräsentiert wird.

8. Verfahren nach einem der vorhergehenden Ansprüche, **dadurch gekennzeichnet,**
**dass** Trainingsdatensätze (PIC(CL)) der ersten Trainingsdaten jeweils einer spezifischen Erkennungsklasse (CL) zugeordnet sind, und
**dass** für eine jeweilige Erkennungsklasse (CL) anhand der dieser Erkennungsklasse (CL) zugeordneten ersten Trainingsdatensätze (PIC(CL)):
- eine klassenspezifische Werteverteilung von Lernparametern ermittelt wird,
- abhängig von der klassenspezifischen Werteverteilung der Lernparameter eine klassenspezifische Fortsetzungsmeldung erzeugt wird, und
- abhängig von der klassenspezifischen Fortsetzungsmeldung das Training mit dieser Erkennungsklasse zugeordneten ersten Trainingsdaten (PIC(CL)) fortgesetzt wird oder andere dieser Erkennungsklasse (CL) zugeordnete Trainingsdaten (PIC2(CL)) angefordert werden.

9. Verfahren nach einem der vorhergehenden Ansprüche, **dadurch**
**gekennzeichnet, dass**
die maschinelle Lernroutine ein künstliches neuronales Netz, ein rekurrentes neuronales Netz, ein faltendes neuronales Netz, ein bayessches neuronales Netz (BNN), einen Autoencoder, eine Deep-Learning-Architektur, eine Support-Vector-Machine, ein datengetriebenes trainierbares Regressionsmodell, einen k-nächste-Nachbarn-Klassifikator, ein physikalisches Modell und/oder einen Entscheidungsbaum implementiert.

10. Verfahren nach einem der vorhergehenden Ansprüche,
**dadurch gekennzeichnet,**
**dass** die Werteverteilung (VLP) der Lernparameter (LP) durch die maschinelle Lernroutine mittels eines bayessches neuronalen Netzes (BNN) ermittelt wird, wobei die Lernparameter (LP) neuronale Gewichte des bayesschen neuronalen Netzes (BNN) sind.

11. Verfahren nach einem der vorhergehenden Ansprüche,
**dadurch gekennzeichnet,**
**dass** durch die maschinelle Lernroutine ein Ensemble von maschinellen Sub-Lernroutinen ausgeführt wird, durch die jeweils ein Satz von Lernparametern eingestellt wird, und
**dass** die Werteverteilung (VLP) der Lernparameter (LP) aus einer Verteilung der Lernparameter (LP) über die Lernparametersätze abgeleitet wird.

12. Verfahren nach einem der vorhergehenden Ansprüche, **dadurch gekennzeichnet,**
**dass** die maschinelle Lernroutine ein neuronales Netz implementiert, wobei die Lernparameter (LP) neuronale Gewichte des neuronalen Netzes sind,
**dass** eine neuronale Struktur des neuronalen Netzes mehrfach variiert wird und für eine jeweilige Variation ein Satz von Ausgabedaten des neuronalen Netzes ermittelt wird, und
**dass** die Werteverteilung (VLP) der Lernparameter (LP) aus einer Verteilung der Ausgabedaten (OCL) über die Ausgabendatensätze abgeleitet wird.

13. Vorrichtung (TA) zum Trainieren einer maschinellen Lernroutine (BNN) zum Steuern eines medizinisches Diagnosegeräts (TS), eingerichtet zum Ausführen eines Verfahrens nach einem der vorhergehenden Ansprüche, die Vorrichtung (TA) umfassend einen Computer und mindestens ein Mikroskop.

14. Computerprogrammprodukt umfassend Befehle, die bei der Ausführung des Verfahrens durch eine Vorrichtung gemäß Anspruch 13, den Computer veranlassen das Verfahren nach einem der Ansprüche 1 bis 12 auszuführen.

15. Computerlesbares Speichermedium mit einem Computerprogrammprodukt nach Anspruch 14.

## Claims

1. Computer-implemented method for training a machine learning routine (BNN) for controlling a technical system (TS), wherein the technical system (TS) is a medical diagnostic apparatus having at least one sensor S and an evaluation device AW, trained by way of a machine learning method, for evaluating sensor data of the sensor S, wherein the at least one sensor S is in the form of a microscope that records microscopic images PIC of biological tissue or of biological cells and transmits them to the evaluation device (AW), wherein a type or a state of the tissue or of the cells and/or a respective pathological class is recognized in the evaluation, wherein
a) a sequence of first training data (PIC) comprising first sensor data of the medical diagnostic apparatus is read in by the machine learning routine (BNN) of the evaluation device,
b) the machine learning routine (BNN) is trained on the basis of the first training data (PIC), wherein a plurality of learning parameters (LP) of the machine learning routine (BNN) is set by the training,
c) a value distribution (VLP) of learning parameters (LP) that occurs during the training is determined,
d) a continuation notification (CN) is generated as a function of the determined value distribution (VLP) of the learning parameters (LP), and
e) depending on the continuation notification (CN), the training is continued with a further sequence of the first training data (PIC), or other training data (PIC2) are requested for the training,
wherein, depending on the continuation notification (CN), the at least one sensor is controlled in such a way that a sensor parameter of the sensor for acquiring the other training data (PIC2) is modified, or a different sensor is used to acquire the other training data (PIC2),
wherein the other training data (PIC2) are recorded by the microscope, by a different microscope and/or a different camera, wherein the other training data (PIC2) are recorded with a higher image resolution, different zoom level and/or in a different spectral region than the first training data (PIC).

2. Method according to Claim 1, **characterized in that** the other training data (PIC2) additionally
- are of a different type than the first training data (PIC),
- are acquired in a different way than the first training data (PIC),
- comprise different sensor data than the first sensor data, and/or
- originate from a different source than the first training data (PIC).

3. Method according to either of the preceding claims, **characterized in that**,
depending on the continuation notification (CN), a sensor system is additionally controlled in such a way that
- a sensor of the sensor system is induced to acquire training data, and/or
- sensor data of the sensor system are selected as training data.

4. Method according to one of the preceding claims, **characterized in that**
a distribution width and/or an entropy value of the value distribution (VLP) of the learning parameters (LP) is determined, and
that with increasing distribution width and/or increasing entropy value, the training is preferably continued with the further sequence of the first training data (PIC).

5. Method according to one of the preceding claims, **characterized in that**
a value distribution (VOCL) of output data (OCL) of the learning routine (BNN) is determined, and
that the continuation notification (CN) is formed as a function of the value distribution (VOCL) of the output data (OCL).

6. Method according to Claim 5, **characterized in that**
a distribution width and/or entropy value of the value distribution (VOCL) of the output data (OCL) is determined, and
that with increasing distribution width and/or increasing entropy value, the other training data (PIC2) are preferably requested.

7. Method according to one of the preceding claims, **characterized in that**
a respective value distribution (VLP, VOCL) is represented by a distribution width.

8. Method according to one of the preceding claims, **characterized in that**
training datasets (PIC(CL)) of the first training data are each assigned to a specific recognition class (CL), and
that for a given recognition class (CL), based on the first training datasets (PIC(CL)) assigned to this recognition class (CL) :
- a class-specific value distribution of learning parameters is determined,
- a class-specific continuation notification is generated as a function of the class-specific value distribution of the learning parameters, and
- depending on the class-specific continuation notification, the training is continued with first training data (PIC(CL)) assigned to this recognition class or other training data (PIC2(CL)) assigned to this recognition class (CL) are requested.

9. Method according to one of the preceding claims, **characterized in that**
the machine learning routine implements an artificial neural network, a recurrent neural network, a convolutional neural network, a Bayesian neural network (BNN), an auto encoder , a deep-learning architecture, a support vector machine, a data-driven trainable regression model, a k-nearest-neighbour classifier, a physical model and/or a decision tree.

10. Method according to one of the preceding claims, **characterized in that**
the value distribution (VLP) of the learning parameters (LP) is determined by the machine learning routine by means of a Bayesian neural network (BNN), wherein the learning parameters (LP) are neural weights of the Bayesian neural network (BNN).

11. Method according to one of the preceding claims, **characterized in that**
the machine learning routine executes an ensemble of machine sub-learning routines, by means of which a respective set of learning parameters is set, and that the value distribution (VLP) of the learning parameters (LP) is derived from a distribution of the learning parameters (LP) over the learning parameter sets.

12. Method according to one of the preceding claims, **characterized in that**
the machine learning routine implements a neural network, wherein the learning parameters (LP) are neural weights of the neural network,
that a neural structure of the neural network is varied multiple times and a set of output data of the neural network is determined for a given variation, and
that the value distribution (VLP) of the learning parameters (LP) is derived from a distribution of the output data (OCL) over the output datasets.

13. Device (TA) for training a machine learning routine (BNN) for controlling a medical diagnostic apparatus (TS), configured for implementing a method according to one of the preceding claims, the device (TA) comprising a computer and at least one microscope.

14. Computer program product comprising instructions that, when the method is implemented by a device according to Claim 13, induce the computer to implement the method according to one of Claims 1 to 12.

15. Computer-readable storage medium containing a computer program product according to Claim 14.

## Revendications

1. Procédé mis en oeuvre par ordinateur pour l'apprentissage d'une routine (BNN) d'enseignement par machine afin de commander un système (TS) technique, dans lequel le système (TS) technique est un appareil de diagnostic médical comprenant au moins un capteur S et un dispositif AW d'exploitation ayant subi un apprentissage au moyen d'un procédé d'enseignement par machine pour l'exploitation de données du capteur S, dans lequel le au moins un capteur S est conformé en microscope, qui enregistre des images PIC microscopique de tissus biologiques ou de cellules biologiques et les transmet au dispositif (AW) d'exploitation, dans lequel on détecte à l'exploitation un type ou un état du tissu ou des cellules et/ou une classe pathologique respective, dans lequel
a) on lit une séquence de premières données (PIC) d'apprentissage ayant des premières données de capteur de l'appareil de diagnostic médical par la routine (BNN) d'enseignement par machine du dispositif d'exploitation,
b) on fait l'apprentissage de la routine (BNN) d'enseignement par machine à l'aide des premières données (PIC) d'apprentissage, dans lequel par l'apprentissage on établit une pluralité de paramètres (LP) d'enseignement de la routine (BNN) d'enseignement par machine,
c) on détermine une répartition (VLP) de valeurs, se produisant dans l'apprentissage, de paramètres (LP) d'enseignement,
d) en fonction de la répartition (VLP) de valeurs déterminée des paramètres (LP) d'enseignement, on produit un message (CN) de continuation, et
e) en fonction du message (CN) de continuation, on poursuit l'apprentissage avec une autre séquence des premières données (PIC) d'apprentissage ou on demande d'autres données (PIC2) d'apprentissage pour l'apprentissage,
dans lequel en fonction du message (CN) de continuation, on commande le au moins un capteur de manière à modifier un paramètre du capteur pour la saisie des autres donnés (PIC2) d'apprentissage ou on utilise un capteur différent pour la saisie des autres données (PIC2) d'apprentissage,
dans lequel on enregistre les autres données (PIC2) d'apprentissage par le microscope par un autre microscope et/ou par une autre caméra, dans lequel on enregistre les autres données (PIC2) d'apprentissage avec une résolution d'image plus grande, un autre agrandissement et/ou dans un autre domaine spectral que les premières données (PIC) d'apprentissage.

2. Procédé suivant la revendication 1, **caractérisé en ce que** les autres données (PIC2) d'apprentissage supplémentairement
- ont un autre type que les premières données (PIC) d'apprentissage,
- sont saisies d'une autre façon que les premières données (PIC) d'apprentissage,
- comprennent d'autres données de capteur que les premières données de capteur et/ou
- proviennent d'une autre source que les premières données (PIC) d'apprentissage.

3. Procédé suivant l'une des revendications précédentes, **caractérisé,**
**en ce qu'**en fonction du message (CN) de continuation, on commande supplémentairement un système de capteur, de manière
- à faire en sorte qu'un capteur du système de capteur saisisse des données d'apprentissage, et/ou
- que des données de capteur du système de capteur soient sélectionnées comme données d'apprentissage.

4. Procédé suivant l'une des revendications précédentes, **caractérisé,**
**en ce que** l'on détermine une largeur de répartition et/ou une valeur d'entropie de la répartition (VLP) de valeur des paramètres d'enseignement (LP), et
**en ce que** l'on poursuit avec une largeur de répartition croissante et/ou une valeur d'entropie croissante, de préférence l'apprentissage avec l'autre séquence des premières données (PIC) d'apprentissage.

5. Procédé suivant l'une des revendications précédentes, **caractérisé,**
**en ce que** l'on détermine une répartition (VOCL) de valeurs de données (OCL) de sortie de la routine (BNN) d'enseignement, et en ce qu'on forme le message (CN) de continuation en fonction de la répartition (VOCL) de valeurs des données (OCL) de sortie.

6. Procédé suivant la revendication 5, **caractérisé,**
**en ce que** l'on détermine une largeur de répartition et/ou une valeur d'entropie de la répartition (VOCL) de valeurs des données (OCL) de sortie, et
**en ce que** l'on demande avec une largeur de répartition croissante et/ou une valeur d'entropie croissante, de préférence les autres données (PIC2) d'apprentissage.

7. Procédé suivant l'une des revendications précédentes, **caractérisé,**
**en ce que** l'on représente une répartition (VLP, VOCL) respective de valeurs par une largeur de répartition.

8. Procédé suivant l'une des revendications précédentes, **caractérisé,**
**en ce que** les ensembles (PIC(CL)) de données d'apprentissage des premières données d'apprentissage sont affectées respectivement à une classe (CL) spécifique de détection, et
**en ce que** pour une classe (CL) respective de détection, à l'aide de premiers ensembles (PIC(CL)) de données d'apprentissage affectés à cette classe (CL) de détection :
- on détermine une répartition de valeurs spécifique à la classe de paramètres d'enseignement,
- on produit en fonction de la répartition de valeurs spécifique à la classe des paramètres d'enseignement un message de continuation spécifique à la classe, et
- en fonction du message de continuation spécifique à la classe, on poursuit l'apprentissage avec des premières données (PIC(CL)) d'apprentissage affectées à cette classe de détection ou on demande d'autres données (PIC2(CL)) d'apprentissage affectées à cette classe (CL) de détection.

9. Procédé suivant l'une des revendications précédentes, **caractérisé en ce que**
la routine d'enseignement par machine met en oeuvre un réseau neuronal artificiel, un réseau neuronal récurrent, un réseau neuronal de convolution, un réseau (BNN) neuronal de Bayes, un auto-codeur, une architecture Deep-Learning, une machine support-Vector, un modèle de régression à données pouvant subir un apprentissage, un classificateur de voisinage k le plus voisin, un modèle physique et/ou un arbre de décision.

10. Procédé suivant l'une des revendications précédentes, **caractérisé,**
**en ce que** l'on détermine la répartition (VLP) de valeurs des paramètres (LP) d'enseignement par la routine d'enseignement par machine au moyen d'un réseau (BNN) neuronal de Bayes, dans lequel les paramètres (LP) d'enseignement sont des poids neuronaux du réseau (BNN) neuronal de Bayes.

11. Procédé suivant l'une des revendications précédentes, **caractérisé,**
**en ce que** l'on exécute par la routine d'enseignement par machine un ensemble de sous-routines d'enseignement par machine, par lesquelles on établit respectivement un ensemble de paramètres d'enseignement et en ce que l'on déduit la répartition (VLP) de valeurs des paramètres (LP) d'enseignement à partir d'une répartition des paramètres (LP) d'enseignement sur les ensembles de paramètres d'enseignement.

12. Procédé suivant l'une des revendications précédentes, **caractérisé,**
**en ce que** la routine d'enseignement par machine met en oeuvre un réseau neuronal, les paramètres (LP) d'enseignement étant des poids neuronaux du réseau neuronal,
**en ce que** l'on fait varier une structure neuronale du réseau neuronal plusieurs fois et on détermine pour une variation respective un ensemble de données de sortie du réseau neuronal, et
**en ce que** l'on déduit la répartition (VLP) de valeurs des paramètres (LP) d'enseignement à partir d'une répartition des données (OCL) de sortie sur les ensembles de données de sortie.

13. Installation (TA) d'apprentissage d'une routine (BNN) d'enseignement par machine pour la commande d'un appareil (TS) de diagnostic médical agencé pour exécuter un procédé suivant l'une des revendications précédentes, l'installation (TA) comprenant un ordinateur et au moins un microscope.

14. Produit de programme d'ordinateur comprenant des instructions qui, lors de la réalisation du procédé par une installation suivant la revendication 13, fait que l'ordinateur exécute le procédé suivant l'une des revendications 1 à 12.

15. Support de mémoire, déchiffrable par ordinateur, comprenant un produit de programme d'ordinateur suivant la revendication 14.
